# EUROPEAN PATENT APPLICATION

(11) **EP 2 241 201 A1**
(43) Date of publication of application: **20.10.2010**
(21) Application number: 09826164.7
(22) Date of filing: 13.11.2009
(51) Int. Cl.: A23L 2/66, A23L 2/00, A23L 2/38

(54) **ACIDIC SOLUBLE PROTEIN-CONTAINING BEVERAGE COMPOSITION AND METHOD FOR PRODUCING SAME**

(30) Priority: 13.11.2008 JP 2008290635; 13.02.2009 JP 2009031864
(71) Applicant: Meiji Seika Kaisha, Ltd., Chuo-ku Tokyo 104-8002 (JP)
(72) Inventor: HIRATA, Toshiaki, Sakado-shi Saitama 350-0214, (JP); YAHIRO, Nobutaka, Sakado-shi Saitama 350-0214 (JP); KODAMA, Takuya, Tokyo 104-8002 (JP); FUKUYAMA, Takayasu, Kasaoka-shi Okayama 714-0091 (JP)
(74) Representative: Müller-Boré & Partner Patentanwälte
(86) International application number: PCT/JP2009/069374
(87) International publication number: WO 2010/055918

(57) **Abstract**

The present invention provides a composition for beverage use **characterized by** comprising an acidic soluble protein, and one or two or more powdery or granular salts selected from alkali metal salts of organic acids and water-soluble basic salts, wherein at least the acidic soluble protein is granulated. Furthermore, the present invention provides a process for producing a composition for beverage use containing an acidic soluble protein, **characterized by** comprising: adding one or two or more powdery or granular salts selected from alkali metal salts of organic acids and water-soluble basic salts in a proportion of 0.01 to 10 parts by weight with respect to 100 parts by weight of an acidic soluble protein, and subjecting at least the acidic soluble protein to granulation. In the composition for beverage use, the formation of undissolved lumps when the composition is dissolved in water is suppressed.

## Description

### Technical Field

The present invention relates to a composition for beverage use comprising an acidic soluble protein and one or two or more powdery or granular salts selected from alkali metal salts of organic acids and water-soluble basic salts, wherein at least the acidic soluble protein is granulated, as well as to a process for producing the same.

### Background Art

When a beverage is prepared from a beverage powder such as sports drink or juice at home, a powdery or granular product is dispersed or dissolved in water, milk, and the like while stirring with a stirring rod such as a muddler for preparation. When a beverage powder containing an acidic soluble protein is to be dissolved in water, undissolved lumps called "dama" or "mamako" are generated. It is thus difficult to obtain the beverage in which the beverage powder is uniformly dispersed.

Then, as a method for suppressing the generation of undissolved lumps, a method in which sodium hydrogencarbonate and an organic acid or an ion material such as a calcium ion as a material for preventing the generation of undissolved lumps so as to improve dispersibility has been proposed (Patent Literature 1).

Furthermore, as a method of suppressing the generation of undissolved lumps, a method in which material powder containing water-insoluble calcium such as egg-shell powder is added has been proposed (Patent Literature 2). Although the effect of preventing the generation of undissolved lumps is surely high, a complete solution has not been achieved.

Furthermore, it has been reported that for a powdery or granular beverage containing a complex of phytosterol and egg yolk lipoprotein, the generation of undissolved lumps can be suppressed by stirring the beverage after poring hot water (Patent Literature 3).
However, none of the above-mentioned methods may be well applied due to the limitation of constituting components in designing of products of powdery or granular beverages. Therefore, none of the above-mentioned methods is necessarily sufficient.

### Citation List

### Patent Literature

[Patent Literature 1] JP 2003-104912 A
[Patent Literature 2] JP 2005-304378 A
[Patent Literature 3] JP 2007-259827 A

### Summary of Invention

### Technical Problem

It is an object of the present invention to provide a composition for beverage use capable of dispersing easily by suppressing the generation of undissolved lumps as mentioned above and a process for producing the same.

### Solution to Problem

In order to achieve the above-mentioned object, the present inventors have extensively studied. As a result, the present inventors have found that the problem can be solved by providing a below-mentioned composition for beverage use capable of easily dispersing and a process for producing the same. That is, the present invention is:
(1) A composition for beverage use characterized by comprising an acidic soluble protein, and one or two or more powdery or granular salts selected from alkali metal salts of organic acids and water-soluble basic salts, wherein at least the acidic soluble protein is granulated.
(2) The composition for beverage use according to (1), **characterized in that** the powder or granule of the alkali metal salts of the organic acids and the water-soluble basic salts has a size capable of passing through a 42 mesh sieve.
(3) The composition for beverage use according to (1), **characterized in that** the powder or granule of the alkali metal salts of the organic acids and the water-soluble basic salts has a size capable of passing through a 60 mesh sieve.
(4) The composition for beverage use according to any one of (1) to (3), **characterized in that** the acidic soluble protein is a protein derived from soybean.
(5) The composition for beverage use according to any one of (1) to (4), **characterized in that** the alkali metal salts of the organic acids are trisodium citrate, tripotassium citrate, or sodium gluconate, and the water-soluble basic salts are trisodium phosphate or disodium hydrogen phosphate.
(6) The composition for beverage use according to any one of (1) to (5), **characterized in that** a binder used in the granulation is one or two or more selected from gum arabic, pullulan, and soybean polysaccharides.
(7) A process for producing a composition for beverage use containing an acidic soluble protein, characterized by comprising: adding one or two or more powdery or granular salts selected from alkali metal salts of organic acids and water-soluble basic salts in a proportion of 0.01 to 10 parts by weight with respect to 100 parts by weight of an acidic soluble protein, and subjecting at least the acidic soluble protein to granulation.
(8) The process for producing a composition for beverage use containing an acidic soluble protein according to (7), **characterized in that** the powder or granule of the alkali metal salts of the organic acids and the water-soluble basic salts has a size capable of passing through a 42 mesh sieve.
(9) The process for producing a composition for beverage use containing an acidic soluble protein according to (7), **characterized in that** the powder or granule of the alkali metal salts of the organic acids and the water-soluble basic salt has a size capable of passing through a 60 mesh sieve.
(10) The process for producing a composition for beverage use containing an acidic soluble protein according to any one of (7) to (9), **characterized in that** the acidic soluble protein is a protein derived from soybean.
(11) The process for producing a composition for beverage use containing an acidic soluble protein according to any one of (7) to (10), **characterized in that** the alkali metal salts of the organic acids are trisodium citrate, tripotassium citrate, or sodium gluconate, and the water-soluble basic salts are trisodium phosphate or disodium hydrogen phosphate.
(12) The process for producing a composition for beverage use containing an acidic soluble protein according to any one of (7) to (11), **characterized in that** a binder used in the granulation is one or two or more selected from gum arabic, pullulan, and soybean polysaccharides.
(13) A composition for beverage use containing an acidic soluble protein produced by the production process according to any one of (7) to (12).

### Advantageous Effects of Invention

The present invention can suppress the formation of undissolved lumps generated when a powdery or granular composition for beverage use containing an acidic soluble protein is manually dissolved in water for preparation of a beverage.

### Description of Embodiments

Hereinafter, embodiments of the present invention will be described in detail.

The acidic soluble protein used in the present invention may be either a vegetable protein or an animal protein, and also may be a hydrolysate thereof. Examples of the vegetable protein include soybean protein and examples of the animal protein include whey concentrate and whey isolate derived from milk. Soybean protein is preferred. The acidic soluble protein in the present invention has solubility of 60% or more at the pH of 4.0 or less at 25°C of aqueous dispersion containing 5% by weight of solid matters.

The production method of an acidic soluble soybean protein is not particularly limited. However, for example, a solution containing soybean protein obtained from defatted or non-defatted soybean can be obtained by carrying out heat treatment in pH range more acidic than of the isoelectric point of the protein and at a temperature exceeding 100°C. Furthermore, the production methods described in WO2002/67690 and WO2005/58071 can be used.

Since it is difficult for the acidic soluble soybean protein used for suppressing the generation of undissolved lumps in the present invention to have an affinity with water in a mere powder state, it is essential that the acidic soluble soybean protein is granulated. The acidic soluble soybean protein may be granulated singly or together with other ingredients.
In the present invention, a granulation method is not particularly limited. Any methods may be employed as long as the affinity with a solvent such as water or fruit juice is sufficiently satisfied. Examples of the granulation methods include: fluidized-bed granulation which includes spraying a spray liquid while fluidizing raw material powder in a device such as a flow coater, and binding particles of the raw material; and extruding granulation which includes extruding raw material powder from a slit in a solvent such as ethanol, and drying thereof, and the like. The spray liquid to be used in the fluidized-bed granulation may be water alone. However, in order to improve the binding force between granulated products, various kinds of binders can be used. Examples of the binder include xanthan gum, galactomannan (guar gum, locust bean gum, tara gum, and the like), carrageenan, cassia gum, glucomannan, native gellan gum, deacylated gellan gum, tamarind seed gum, pectin, psyllium seed gum, gelatin, gum tragacanth, karaya gum, gum arabic, ghatti gum, macrophomopsis gum, agar, alginic acids (alginic acid, alginate), curdlan, pullulan, cellulose derivatives such as methylcellulose (MC), hydroxypropyl methylcellulose (HPMC), sodium carboxymethylcellulose (CMC), hydroxypropyl cellulose (HPC), hydroxyethyl cellulose (HEC), water soluble hemicellulose, soybean polysaccharides, processed/chemically modified starch, non-processed starch (raw starch), dextrin, and the like. Preferably, one or two or more of gum arabic, pullulan, and soybean polysaccharides are used. Furthermore, an emulsifying agent such as lecithin and various kinds of fatty acid esters can be used in combination with the binder depending upon the purpose. If possible, additives for coloring and flavouring may be mixed and subjected to granulation together.

Examples of the alkali metal salts of organic acids of the present invention include salts of alkali metals such as sodium, potassium and calcium of organic acids such as citric acid, tartaric acid, lactic acid, malic acid, gluconic acid, and fumaric acid. Trisodium citrate, tripotassium citrate, and sodium gluconate are preferred. Furthermore, examples of the water-soluble basic salts include trisodium phosphate, disodium hydrogen phosphate, tripotassium phosphate, calcium phosphate, sodium acetate, potassium acetate, calcium acetate, and the like. Trisodium phosphate and disodium hydrogen phosphate are preferred. The alkali metal salts of organic acids and water-soluble basic salts may be an anhydrate or hydrate. Furthermore, the number of hydration water molecules is not limited. For example, trisodium citrate is known to be present as anhydrate, dihydrate, trihydrate and pentahydrate. Tripotassium citrate is known to be present as anhydrate and monohydrate. Sodium gluconate is known to be present as anhydrate. Trisodium phosphate is known to be present as anhydrate and dodecahydrate. Disodium hydrogen phosphate is known to be present as anhydrate, dihydrate, heptahydrate and dodecahydrate.

The alkali metal salts of organic acids and the water-soluble basic salts of the present invention is a powder or granule. Furthermore, it is preferable that the particle diameter thereof is a size capable of passing through a 42 mesh sieve (size capable of passing through a 355 µm × 355 µm square gap). More preferably, the particle diameter is a size capable of passing through a 60 mesh sieve (size capable of passing through a 250 µm × 250 µm square gap). When the particle diameter is a size capable of passing through a 42 mesh sieve or a 60 mesh sieve, a sufficient effect of suppressing the formation of undissolved lumps can be exhibited.

A powder of the alkali metal salts of organic acids and the water-soluble basic salts may be mixed with an acidic soluble protein and subjected to granulation together, or may be added after granulation of an acidic soluble protein and mixed together. Furthermore, the amount of the alkali metal salts of organic acids and the water-soluble basic salts is 0.01 to 10% by weight, and preferably 0.1 to 4.0% by weight with respect to the total amount of the composition for beverage use.

The proportion of the acidic soluble protein with respect to the alkali metal salts of the organic acids and the water-soluble basic salts of the present invention is 0.01 to 10 parts by weight, preferably, 0.1 to 6.0 parts by weight, and more preferably, 0.5 to 5.1 parts by weight with respect to 100 parts by weight of the acidic soluble protein. Furthermore, the proportion of the acidic soluble protein occupied in the total composition for beverage use is 50 to 99% by weight and preferably 60 to 85% by weight.

A beverage obtained by dissolving 14 g of the composition for beverage use of the present invention in 300 ml of water at 25°C has a pH in the range from 2 to 5, preferably 2 to 4, and more preferably 3.0 to 3.9. An aqueous dispersion of an acidic soluble protein usually shows acidic pH. When an alkali metal salt of an organic acid or a water-soluble basic salt is added, the pH of the aqueous dispersion shifts to the neutral and alkaline side where the isoelectric point of the acidic soluble protein is present. Therefore, when an alkali metal salt of an organic acid or a water-soluble basic salt is added, hydration of an acidic soluble protein is reduced and dispersibility is increased. The increase in dispersibility makes it possible to suppress the formation of undissolved lumps, but the reduction in hydration decreases solubility. The balance between hydration and dispersibility is important. Even if dispersibility is increased and the formation of undissolved lumps can be suppressed, undissolved materials are increased when hydration is too reduced and solubility of the acidic soluble protein is remarkably decreased. As a result, the product may not be suitable for drinking. In order to keep a balance between hydration and dispersibility appropriately, it is preferable that the pH of the beverage is maintained in the above-mentioned range.

Other food raw materials that can be used in the composition for beverage use of the present invention include acidulants, saccharides, peptides, amino acids, various kinds of physiologically active substances, vitamins, dietary fiber, polysaccharides, alcohols, fats and oils, coloring agents, and the like. Examples of the acidulants include citric acid, lactic acid, acetic acid, malic acid, tartaric acid, phosphoric acid, and the like. The kinds of saccharides are not particularly limited. Examples of the saccharides include sucrose, maltose, fructose, glucose, invert sugar, powder starch syrups, dextrin, oligosaccharides, and the like. Furthermore, sweeteners with a high sweetness, such as, for example, aspartame, stevia, sucralose, acesulfame potassium, and the like, can be used.

Examples of the peptides include soybean peptide, whey peptide, collagen peptide derived from fish or animal, and the like. Examples of the amino acids include branched-chain amino acids such as valine, leucine, and isoleucine; sulfur containing amino acid such as cysteine, and methionine; and various kinds of other amino acids.

Examples of the various kinds of physiologically active substances include polyphenols such as isoflavone, anthocyanin, rutin, hesperidin, naringin, chlorogenic acid, gallic acid, ellagic acid, tannine, and catechin; and saponin, lycopene, sesamin, ceramide, phytosterol, γ-aminobutyric acid, coenzyme Q10, lactoferrin, DHA, β-carotene, and the like.
The kinds of vitamins are not particularly limited. Examples of the vitamins include various kinds of vitamins such as ascorbic acid (vitamin C), riboflavin, pantothenic acid, folic acid, vitamin B group, other vitamins A, D, E, K, and P.

In the composition for beverage use of the present invention, liquid oil can be used to such an extent that it can be dispersed uniformly and it does not form blocking of powders. Fats and oils having a high melting point are preferred in terms of stability. Furthermore, powdery fats and oils are more preferable. The kinds of fats and oils are not particularly limited as long as they can be used for food. Examples of the fats and oils include vegetable fats and oils such as soybean oil, rape seed oil, and corn oil, or animal fats and oils such as milk fat, and processed fats and oils thereof. Furthermore, an emulsifying agent may be appropriately blended for the purpose of, for example, stabilizing the emulsion state of fats and oils.

When the composition for beverage use of the present invention foams when stirred in an aqueous medium, an antifoaming agent may be preferably contained. Examples of the antifoaming agent include sucrose fatty acid esters, sorbitan fatty acid esters, glycerin fatty acid esters, lecithin, and the like.

### Examples

Hereinafter, the present invention will be described in more detail with reference to Examples. It should be noted that the scope of the present invention is not limited thereto.

### Preparation Example 1

Soybeans were pressed into flakes and the oil was extracted, separated and removed by using n-hexane as an extraction solvent to obtain defatted soybeans with less denaturation (nitrogen soluble index (NSI): 91). To 5 kg of the defatted soybeans, 35 kg of water was added. The mixture was adjusted to pH 7 with a diluted sodium hydroxide solution, and extracted with stirring at room temperature for one hour. Then, the mixture was centrifuged at 4,000 G, and okara and insoluble matter were separated to obtain defatted soybean milk. The defatted soybean milk was adjusted to pH 4.5 with phosphoric acid and centrifuged at 2,000 G with a continuous centrifugal separator (decanter) to obtain an insoluble fraction (acid precipitated curd) and a soluble fraction (whey). Water was added to the acid precipitated curd so that the solid content was 10% by weight to obtain an acid precipitated curd slurry. This was adjusted to pH 4.0 with phosphoric acid and then warmed to 40°C. To this solution was added a phytase (manufactured by NOVO) in an amount corresponding to 8 units relative to the solid content, and the enzymatic treatment was carried out for 30 minutes. After completion of the reaction, the reaction mixture was adjusted to pH 3.5 and heated with a continuous direct heat sterilization apparatus at 120°C for 15 seconds. This was subjected to spray drying so as to obtain an acidic soluble soybean protein powder (1.5 kg). Fluidized-bed granulation was carried out by using the obtained acidic soluble soybean protein powder as raw material, and using 1 % by weight gum arabic aqueous solution as a binder. Thus, Granule A was produced.

### Example 1

Granule A to which trisodium citrate (tri-Na citrate; dihydrate, the same applies to those that follow) powder that passed through a 60 mesh sieve was added in the proportion shown in Table 1 (Sample 2), Granule A to which powder sugar that passed through a 60 mesh sieve was added in the proportion shown in Table 1 (Sample 3), or only Granule A (Sample 1) were prepared. The whole amount of each of the prepared products was added into a 500 ml beaker containing 300 ml of water (25°C), and then manually stirred by using a medical spoon along the inner wall of the beaker at 4.5 round/second for 20 seconds. Immediately after stirring, the content in the beaker was taken out onto a 22 mesh sieve, extra water attached to the sieve was wiped off without touching residues on the sieve. Thereafter, the weight of the residues was measured. The results are shown in Table 1. As shown in Table 1, in Sample 1, undissolved lumps were generated and the amount of residues was 3.02 g. Furthermore, in Sample 2, the amount of residues was reduced to 1.1 g.
Herein, the formation rate of undissolved lumps in Example 1 was expressed as a percentage of the amount of residues in each sample with the residues in Sample 1 set at 100. The formation rate of undissolved lumps in Sample 2 was 36.4%, showing that the formation of undissolved lumps was suppressed by the addition of trisodium citrate. On the contrary, in Sample 3, the residues were 3.13 g and the formation rate of undissolved lumps was 103.6%. Therefore, powder sugar did not exhibit the effect of suppressing the formation of undissolved lumps. Furthermore, pH of each sample dissolved in water was measured. As a result, the pH of Samples 1 to 3 were 3.13, 3.58 and 3.14, respectively.

**[Table 1]**

| Sample No. | | 1 | | 2 | | 3 | |
|---|---|---|---|---|---|---|---|
| Granule A | Addition amount (left: part by weight right: g) | 100 | 10 | 100 | 9.7 | 100 | 9.7 |
| Tri Na citrate | Addition amount (left: part by weight right: g) | 0 | 0 | 3.1 | 0.3 | 0 | 0 |
| Powder sugar | Addition amount (left: part by weight right: g) | 0 | 0 | 0 | 0 | 3.1 | 0.3 |
| pH | | 3.13 | | 3.58 | | 3.14 | |
| Residue (g) | | 3.02 | | 1.1 | | 3.13 | |
| Formation rate of undissolved lumps (%) | | 100 | | 36.4 | | 103.6 | |

### Example 2

In order to determine an appropriate addition proportion of trisodium citrate (tri-Na citrate) to Granule A, Samples 4 to 10 were prepared by adding trisodium citrate and powder sugar (both are powders that passed through a 60 mesh sieve) so that the whole amount was 14 g with the amount of Granule A fixed to 11 g, in which trisodium citrate (that passed through a 60 mesh sieve) was added and mixed to Granule A in the proportion shown in Table 2. The test for evaluating the formation rate of undissolved lumps was carried out by the same method as in Example 1. In this Example, the formation rate of undissolved lumps was calculated with the residues in Sample 4 set at 100.
The test results are shown in Table 2. As shown in Table 2, when the proportion of trisodium citrate was in the range from 0.64 to 5.09 parts by weight with respect to 100 parts by weight of Granule A, the formation rate of undissolved lumps was reduced in accordance with the increase in the proportion of trisodium citrate. However, when the proportion was 7.64 parts by weight (Sample 10), precipitation of aggregates was observed. The formation of undissolved lumps was suppressed, but apparent formation rate of undissolved lumps was increased, and therefore, it was not suitable for products. Furthermore, the pH of Samples 4 to 10 dissolved in water were 3.13, 3.26, 3.42, 3.51, 3.58, 3.90 and 4.20, respectively. Therefore, by adding 0.64 to 5.09 parts by weight of trisodium citrate with respect to 100 parts by weight of Granule A, the formation of undissolved lumps was suppressed.

**[Table 2]**

| Sample No. | | 4 | | 5 | | 6 | | 7 | |
|---|---|---|---|---|---|---|---|---|---|
| Granule A | Addition amount (left: part by weight right g) | 100 | 11 | 100 | 11 | 100 | 11 | 100 | 11 |
| Tri Na citrate | Addition amount (left: part by weight right: g) | 0 | 0 | 0.64 | 0.07 | 1.27 | 0.14 | 1.91 | 0.21 |
| Powder sugar | Addition amount (left: part by weight right g) | 27.27 | 3.00 | 26.63 | 2.93 | 25.99 | 2.86 | 25.36 | 2.79 |
| pH | | 3.13 | | 3.26 | | 3.42 | | 3.51 | |
| Residue (g) | | 2.78 | | 1.94 | | 1.70 | | 1.48 | |
| Formation rate of undissolved lumps (%) | | 100 | | 69.8 | | 61.1 | | 53.2 | |

| Sample No. | | 8 | | 9 | | 10 | | | |
|---|---|---|---|---|---|---|---|---|---|
| Granule A | Addition amount (left: part by weight right g) | 100 | 11 | 100 | 11 | 100 | 11 | | |
| Tri Na citrate | Addition amount (left: part by weight right g) | 2.54 | 0.28 | 5.09 | 0.56 | 7.64 | 0.84 | | |
| Powder sugar | Addition amount (left: part by weight right g) | 24.72 | 2.72 | 22.17 | 2.44 | 19.63 | 2.16 | | |
| pH | | 3.58 | | 3.90 | | 4.20 | | | |
| Residue (g) | | 1.05 | | 0.93 | | 2.65 | | | |
| Formation rate of undissolved lumps (%) | | 37.8 | | 33.5 | | 95.3 | | | |

### Comparative Example 1

Instead of trisodium citrate powder that passed through a 60 mesh sieve in Example 2, trisodium citrate powder that passed through a 24 mesh sieve and retained on a 60 mesh sieve (size that passed through a 710 µm × 710 µm square gap and not passed through a 250 µm × 250 µm square gap) was used and the same evaluation test was carried out as in Example 2. As a result, residues retaining on a 22 mesh sieve was 3.06 g, and the formation rate of undissolved lumps was 110% when the residues of Sample 4 in Example 2 was set at 100. That is to say, in trisodium citrate powder that passed through a 24 mesh sieve and retained on a 60 mesh sieve, the formation of undissolved lumps was not suppressed at all. The pH of this sample was 3.58.

### Example 3

Instead of trisodium citrate powder that passed through a 60 mesh sieve in Example 2, 0.28 g of trisodium phosphate powder that passed through a 60 mesh sieve, or needle crystals of trisodium phosphate, and 2.72 g of powder sugar were used and the same evaluation test as in Example 2 was carried out. Note here that the long axis of the needle crystals is about 1 to 3 mm and retains on a 20 mesh sieve. As a result, the amount of residues retaining on a 22 mesh sieve was 1.12 g and 2.86 g, respectively. The formation rates of undissolved lumps were 40.3% and 102.9%, respectively, when the amount of residues of Sample 4 in Example 2 was set at 100. Furthermore, the pH of both samples at this time was 3.48. From the above mention, it is clear that when the particle diameter of a powder is made to be a size capable of passing through a 60 mesh sieve, trisodium phosphate has also an effect of suppressing the formation of undissolved lumps.

### Example 4

Granule B was produced by mixing trehalose, citric acid anhydrate, glycerin fatty acid ester, and dextrin to the acidic soluble soybean protein powder obtained in Preparation Example 1 at the proportion shown in Table 3, and then subjecting the mixture to fluidized-bed granulation by using a 1% by weight gum arabic aqueous solution. Then, to Granule B, trisodium citrate (tri-Na citrate) powder that passed through a 60 mesh sieve at the proportion shown in Table 4 was added so that the total amount was 14 g. Then, the evaluation test was carried out by the same method as in Example 1.

**[Table 3]**

| Raw material | Mixing proportion (% by weight) |
|---|---|
| Acidic soluble soybean protein powder | 77.5 |
| Trehalose | 5.0 |
| Citric acid anhydrate | 6.2 |
| Glycerin fatty acid ester (antifoaming agent) | 0.5 |
| Dextrin | 10.8 |

**[Table 4]**

| Sample No. | | 11 | | 12 | | 13 | |
|---|---|---|---|---|---|---|---|
| Granule B | Addition amount (left: part by weight right: g) | 100 | 14.00 | 100 | 13.86 | 100 | 13.72 |
| Tri Na citrate | Addition amount (left: part by weight right: g) | 0 | 0 | 1.01 | 0.14 | 2.04 | 0.28 |
| pH | | 2.95 | | 3.07 | | 3.18 | |
| Residue (g) . | | 3.07 | | 1.14 | | 0.81 | |
| Formation rate of undissolved lumps (%) | | 100 | | 37.1 | | 26.4 | |

| Sample No. | | 14 | | 15 | | | |
|---|---|---|---|---|---|---|---|
| Granule B | Addition amount (left: part by weight right: g) | 100 | 13.58 | 100 | 13.44 | | |
| Tri Na citrate | Addition amount (left: part by weight right: g) | 3.09 | 0.42 | 4.17 | 0.56 | | |
| pH | | 3.33 | | 3.44 | | | |
| Residue (g) | | 0.76 | | 0.66 | | | |
| Formation rate of undissolved lumps (%) | | 24.8 | | 21.5 | | | |

The results are shown in Table 4. The residue of Sample 11 containing no trisodium citrate that passed through a 60 mesh sieve was 3.07 g. When the residue of Sample 11 was set at 100, the formation rate of undissolved lumps of Samples 12 to 15 that had been obtained by adding and mixing 0.14 g (1.01 parts by weight) to 0.56 g (4.17 parts by weight) of trisodium citrate that passed through a 60 mesh sieve was 37.1 to 21.5%. The formation of undissolved lumps was remarkably suppressed in accordance with the increase in the addition rate of trisodium citrate. Furthermore, the pH of Samples 12 to 15 were 3.07 to 3.44.

### Example 5

Instead of trisodium citrate (tri-Na citrate) powder that passed through a 60 mesh sieve in Example 2, 0.14 g each of trisodium citrate powder that passed through a 60 mesh sieve and trisodium phosphate (tri-Na phosphate; dodecahydrate, the same applies to those that follow) powder that passed through a 60 mesh sieve, 0.28 g of disodium hydrogen phosphate (di-Na hydrogen phosphate; dodecahydrate, the same applies to those that follow) powder that passed through a 60 mesh sieve, 0.28 g of tripotassium citrate (tri-K citrate; monohydrate, the same applies to those that follow) powder that passed through a 60 mesh sieve, or 0.28 g of sodium gluconate (Na gluconate) powder that passed through a 60 mesh sieve, and 2.72 g of powder sugar that passed through a 60 mesh sieve were added to Granule A (11 g) so that the total amount of 14 g. Thus, Samples 16 to 19 were prepared. Then, the evaluation test of each sample was carried out by the same method as in Example 2. The results are shown in Table 5. That is to say, the residues of Samples 16 to 19 weighed 0.97 g, 1.93 g, 1.22 g and 2.21 g, respectively. When the residue of Sample 4 in Example 2 was set at 100, the formation rates of undissolved lumps were 34.9%, 69.4%, 43.9% and 79.5%, respectively. Therefore, the addition of powder mixture of trisodium citrate powder and trisodium phosphate powder that passed through a 60 mesh sieve, disodium hydrogen phosphate, tripotassium citrate or sodium gluconate that passed through a 60 mesh sieve suppressed the formation undissolved lumps in Granule A. Furthermore, the pH of Samples 16 to 19 were 3.28 to 3.58.

**[Table 5]**

| Sample No. | 4 | 16 | 17 |
|---|---|---|---|
| Types of added salts passing through a 60 mesh sieve | Only powder sugar | Tri-Na citrate + tri-Na phosphate | Di-Na hydrogen phosphate |
| pH | 3.13 | 3.58 | 3.32 |
| Residue (g) | 2.78 | 0.97 | 1.93 |
| Formation rate of undissolved lumps (%) | 100 | 34.9 | 69.4 |

| Sample No. | 18 | 19 | |
|---|---|---|---|
| Types of added salts passing Tri-K through a 60 mesh sieve | | citrate Na gluconate | |
| pH | 3.56 | 3.28 | |
| Residue (g) | 1.22 | 2.21 | |
| Formation rate of undissolved lumps (%) | 43.9 | 79.5 | |

### Example 6

Instead of trisodium citrate powder that passed through a 60 mesh sieve in Example 2, trisodium citrate powder that passed through a 42 mesh sieve and retained on a 60 mesh sieve (size that passed through a 355 µm × 355 µm square gap and not passed through a 250 µm x 250 µm square gap) was used and the evaluation test was carried out by the same method as in Example 2. As a result, the residue was 1.98 g and the formation rate of undissolved lumps was 71.2% when the residue of Sample 4 in Example 2 was set at 100. Therefore, also with trisodium citrate powder that passed through a 42 mesh sieve and retained on a 60 mesh sieve, the formation of undissolved lumps was suppressed. Furthermore, the pH of this sample was 3.58.

### Example 7

Granule C was obtained by carrying out fluidized-bed granulation by using the acidic soluble soybean protein powder produced in Preparation Example 1 as a raw material and a 1% by weight pullulan aqueous solution as a binder by the same method as in Preparation Example 1. Furthermore; Granule D was obtained by carrying out fluidized-bed granulation by using a 1% by weight soybean polysaccharides (trade name: SOYAFIVE S-RA100 (Fuji Oil Co., Ltd.)) aqueous solution. The products singly using 10 g of Granule C or D were defined as Samples 20 and 22, and the products obtained by adding 0.3 g of trisodium citrate (tri-Na citrate) powder that passed through a 60 mesh sieve to 9.7 g of Granule C or D was defined as Samples 21 and 23. The evaluation test was carried out by the same method as in Example 1.

**[Table 6]**

| Sample No. | 20 | 21 |
|---|---|---|
| Types of binder | Granule C (pullulan) citrate | Granule C (pullulan) + tri-Na |
| pH | 3.13 | 3.57 |
| Residue (g) | 9.65 | 6.03 |
| Formation rate of undissolved lumps (%) | 100 | 62.5 |
| Sample No. | 22 | 23 |
| Types of binder | Granule D (soybean polysaccharides) | Granule D (soybean polysaccharides) + tri-Na citrate |
| pH | 3.12 | 3.56 |
| Residue (g) | 5.28 | 4.07 |
| Formation rate of undissolved lumps (%) | 100 | 77.1 |

The results are shown in Table 6. The residue of only Granule C or D was 9.65 g or 5.28 g, respectively, and the residues of Granule C or D to which trisodium citrate (tri-Na citrate) powder that passed through a 60 mesh sieve was added was 6.03 g and 4.07 g, respectively. When the residue of only Granule C or D was set at 100, the formation rate of undissolved lumps of Granule C or D to which trisodium citrate powder that passed through a 60 mesh sieve was added was 62.5% and 77.1%, respectively. Therefore, even if pullulan or soybean polysaccharides was used instead of gum arabic as a binder, the formation of undissolved lumps was suppressed by adding trisodium citrate that passed through a 60 mesh sieve. Furthermore, the pH of Samples 21 and 23 were 3.57 and 3.56, respectively.

## Claims

1. A composition for beverage use **characterized by** comprising an acidic soluble protein, and one or two or more powdery or granular salts selected from alkali metal salts of organic acids and water-soluble basic salts, wherein at least the acidic soluble protein is granulated.

2. The composition for beverage use according to Claim 1, **characterized in that** the powder or granule of the alkali metal salts of the organic acids and the water-soluble basic salts has a size capable of passing through a 42 mesh sieve.

3. The composition for beverage use according to Claim 1, **characterized in that** the powder or granule of the alkali metal salts of the organic acids and the water-soluble basic salts has a size capable of passing through a 60 mesh sieve.

4. The composition for beverage use according to any one of Claims 1 to 3, **characterized in that** the acidic soluble protein is a protein derived from soybean.

5. The composition for beverage use according to any one of Claims 1 to 4, **characterized in that** the alkali metal salts of the organic acids are trisodium citrate, tripotassium citrate, or sodium gluconate, and the water-soluble basic salts are trisodium phosphate or disodium hydrogen phosphate.

6. The composition for beverage use according to any one of Claims 1 to 5, **characterized in that** a binder used in the granulation is one or two or more selected from gum arabic, pullulan, and soybean polysaccharides.

7. A process for producing a composition for beverage use containing an acidic soluble protein, **characterized by** comprising: adding one or two or more powdery or granular salts selected from alkali metal salts of organic acids and water-soluble basic salts in a proportion of 0.01 to 10 parts by weight with respect to 100 parts by weight of an acidic soluble protein, and subjecting at least the acidic soluble protein to granulation.

8. The process for producing a composition for beverage use containing an acidic soluble protein according to Claim 7, **characterized in that** the powder or granule of the alkali metal salts of the organic acids and the water-soluble basic salts has a size capable of passing through a 42 mesh sieve.

9. The process for producing a composition for beverage use containing an acidic soluble protein according to Claim 7, **characterized in that** the powder or granule of the alkali metal salts of the organic acids and the water-soluble basic salt has a size capable of passing through a 60 mesh sieve.

10. The process for producing a composition for beverage use containing an acidic soluble protein according to any one of Claims 7 to 9, **characterized in that** the acidic soluble protein is a protein derived from soybean.

11. The process for producing a composition for beverage use containing an acidic soluble protein according to any one of Claims 7 to 10, **characterized in that** the alkali metal salts of the organic acids are trisodium citrate, tripotassium citrate, or sodium gluconate, and the water-soluble basic salts are trisodium phosphate or disodium hydrogen phosphate.

12. The process for producing a composition for beverage use containing an acidic soluble protein according to any one of Claims 7 to 11, **characterized in that** a binder used in the granulation is one or two or more selected from gum arabic, pullulan, and soybean polysaccharides.

13. A composition for beverage use containing an acidic soluble protein produced by the production process according to any one of Claims 7 to 12.
